# EUROPEAN PATENT APPLICATION

(11) **EP 2 128 180 A1**
(43) Date of publication of application: **02.12.2009**
(21) Application number: 08157197.8
(22) Date of filing: 29.05.2008
(51) Int. Cl.: C08F 220/34, C08F 220/28

(54) **Amphiphilic branched polymers and their use as emulsifiers**

(71) Applicant: Unilever N.V., 3013 AL Rotterdam (NL)
(72) Inventor: The designation of the inventor has not yet been filed
(74) Representative: Teasdale, Nicola Joanne

(57) **Abstract**

The present invention relates to amphiphilic branched copolymers, methods for their preparation, emulsions comprising such copolymers and their use as emulsifiers. The polymers are responsive by nature, by forming non-covalent bonds between monomer residues upon applying external stimuli. In a preferred embodiment of the copolymer, this copolymer can be used to stabilise emulsions and the emulsion droplets can be reversibly aggregated and de-aggregated.

## Description

The present invention relates to amphiphilic branched copolymers, methods for their preparation, emulsions comprising such copolymers and their use as emulsifiers.

Branched polymers are polymer molecules of a finite size which are branched. Branched polymers differ from crosslinked polymer networks which tend towards an infinite size having interconnected molecules and which are generally not soluble but often swellable. In some instances, branched polymers have advantageous properties when compared to analogous linear polymers. For instance, solutions of branched polymers are normally less viscous than solutions of analogous linear polymers. Moreover, higher molecular weights of branched copolymers can be solubilised more easily than those of corresponding linear polymers. Also, branched polymers tend to have more end groups than a linear polymer and therefore generally exhibit strong surface-modification properties. Thus, branched polymers are useful components of many compositions utilised in a variety of fields.

Branched polymers are usually prepared via a step-growth mechanism via the polycondensation of a suitable monomer and are usually limited via the chemical functionality of the resulting polymer and the molecular weight. In an addition polymerisation process, a one-step process can be used in which a multifunctional monomer is used to provide functionality in the polymer chain from which polymer branches may grow. However, a limitation on the use of conventional one-step processes is that the amount of multifunctional monomer must be carefully controlled, usually to substantially less than 0.5% w/w in order to avoid extensive cross-linking of the polymer and the formation of insoluble gels. It is difficult to avoid crosslinking using this method, especially in the absence of a solvent as diluent and/or at high conversion of monomer to polymer.

Amphiphilic branched copolymers are branched copolymers which have nominally a hydrophilic portion and a hydrophobic portion. This can be either a permanent or transient hydrophilic or hydrophobic moiety; for example a weak acid or basic unit who's hydrophobicity is dependent on the pH of the polymer solution.

Many cosmetic, pharmaceutical or food products are in the form of emulsions, for example as a dispersed hydrophobic phase in a continuous phase (oil-in-water or o/w), or as a hydrophilic phase dispersed in a continuous hydrophobic phase (water-in-oil or w/o). The formation of stable emulsions requires the use of materials which can adsorb at the biphasic interface and prevent coalescence, or demulsification, of the droplets. Amphiphilic molecules such as surfactants or surface-active polymers are typically used for the stabilisation of oil and water emulsions as one part of the molecule interacts with the oil phase and the other interacts with the water phase. Emulsions with surfactants as emulsifier may have disadvantages such as kinetic instability, high foaming and irritancy due to the surfactants.

Emulsions stabilised with inorganic or organic particles have been shown to have excellent stability with low foaming and reduced irritancy. Typically, these emulsions are formed by the use of finely divided inorganic particles such as silica, alumina, metal oxides etc. The driving force for particles stabilising an interface is the reduction in free energy as the particle adsorbs. In many cases particle-stabilised emulsions are extremely stable as the energy required to remove the particle from the surface is large - in some instances the particles which stabilise an emulsion droplet can be considered to be irreversibly adsorbed. Such particles are referred to as particulate, Pickering or Ramsden emulsifiers and are commonly inorganic species. Also organic particles have been investigated as Pickering emulsifiers.

Hydrophobic actives, as for example drugs and fragrances, are often only useful if they can be stabilised in hydrophilic environments for sustained periods of time, such as in the body or in aqueous home and personal care formulations. Consequently there is a need for developing suitable vehicles for such actives. In this context, self-assembled polymer structures, such as micelles, have received significant attention due to their functionality and size. Encapsulation of actives within these polymeric vehicles followed by their controlled and/or triggered release has been routinely used as a test for their suitability.

WO 99/46301 discloses a method of preparing a branched polymer comprising the steps of forming an admixture of a monofunctional vinylic monomer with from 0.3 to 100% w/w (of the weight of the monofunctional monomer) of a multifunctional vinylic monomer and from 0.0001 to 50% w/w (of the weight of the monofunctional monomer) of a chain transfer agent and optionally a free-radical polymerisation initiator and thereafter reacting said mixture to form a copolymer. The examples of WO 99/46301 describe the preparation of primarily hydrophobic polymers and, in particular, polymers in which methyl methacrylate constitutes the monofunctional monomer. These polymers are said to be useful as components in reducing the melt viscosity of linear poly(methyl methacrylate) in the production of moulding resins.

WO 99/46310 discloses a method of preparing a (meth)acrylate functionalised polymer comprising the steps of forming an admixture of a monofunctional vinylic monomer with from 0.3-100 % w/w (based on monofunctional monomer) of a polyfunctional vinylic monomer and from 0.0001-50 % w/w of a chain transfer agent, reacting said mixture to form a polymer and terminating the polymerisation reaction before 99 % conversion. The resulting polymers are useful as components of surface coatings and inks, as moulding resins or in curable compounds, e.g. curable moulding resins or photoresists.

WO 02/34793 discloses a rheology modifying copolymer composition containing a branched copolymer of an unsaturated carboxylic acid, a hydrophobic monomer, a hydrophobic chain transfer agent, a cross linking agent, and, optionally, a steric stabilizer. The copolymer provides increased viscosity in aqueous electrolyte-containing environments at elevated pH. The method for production is a solution polymerisation process. The polymer is lightly crosslinked, less than 0.25%.

H. Hayashi et al. (Macromolecules 2004, 37, 5389-5396) describe the emulsion polymerisation of 2-(diethylamino)ethyl methacrylate to obtain gel particulates in the size range between 50 and 680 nm in the presence of a cross-linking agent such as ethylene glycol dimethacrylate, using alpha-vinylbenzyl-omega-carboxy-PEG as a stabilising reagent. A chain transfer agent is not utilised in the polymerisation process. These nanogels can potentially be utilitised in applications such as diagnostics and controlled drug releasing devices.

US 6,361,768 B1 discloses a hydrophilic ampholytic polymer synthesised by reacting polymerisable amino and carboxy-functional ethylenically unsaturated monomers, together with a non-ionic hydrophilic monomer, to provide a polymer having a glass transition temperature above about 50°C, and optionally hydrophobic monomer(s), and cross-linking monomer(s), however without the use of a chain transfer agent. The copolymer is precipitated from a polymerisation media which includes a suitable organic solvent. The polymer is optionally lightly crosslinked. The resulting copolymer is in the form of a fine powder, with submicron particle size. As such it is suitable for use as a thickener or rheology modifier in personal care formulations, as a bioadhesive, and for pharmaceutical applications. The ampholytic nature is probably a consequence of the designed compatibility with high salt/surfactant levels.

US 2006/0106133 A1 discloses an ink-jet ink comprising an amphiphilic polymer, wherein the polymer comprises hydrophilic and hydrophobic portions, at a molecular weight range from 300 to 100,000 Daltons, and may be in the form of a straight chain polymer, a star-form polymer or an emulsion form having a polymer core. A chain transfer agent is not used in the production of the polymer. The polymer is used as a wetting aid in the formation of uniform ink droplets on the substrate.

EP 1 384 771 A1 discloses acid-functional triggered responsive polyelectrolytes, that are stable and insoluble in an aqueous system at relatively high ionic strength or base concentration and that disperse, disintegrate, dissolve, destabilise, swell, or combinations thereof, when the ionic strength or base strength of the aqueous system changes (notably decreases). The polyelectrolytes thus show a triggered response. The polyelectrolyte is one or more alkali soluble polymers comprising: (a) 5-70 weight percent of acidic monomers selected from e.g. (meth)acrylic acid, (b) 30-95 weight percent of one or more non-ionic vinyl monomers selected from e.g. butyl acrylate and methyl methacrylate, and optionally (c) 0.01 to 5 weight percent of one or more cross-linking agents like polyethylenically unsaturated monomers or a metal crosslinking agent. The polymers are prepared via an emulsion polymerisation route crosslinked with either a polyvalent metal salt (like zinc and calcium) or a polyvinylic monomer, prepared either with or without a chain transfer agent, to reduce the molecular weight of the polymer. The triggered response may lead to release of components that are entrapped within the polyelectrolytes. The disclosure does not embody hydrogen-bonding and is based on alkali-swellable crosslinked polymers, high pH being the swelling trigger.

WO 2008/004988 discloses an amphiphilic linear copolymer, having at least one hydrophobic endgroup. The first monomer is such that the copolymer is thermally responsive and the second monomer comprises a carboxylic acid or carboxylate group. The copolymer is arranged in micelles in a liquid, and the liquid may be an organic liquid, whereby the micelles adopt a core-shell structure in which a hydrophilic core is surrounded by a hydrophobic shell. The micelles may contain a biologically active compound (e.g. an enzyme) which may be released from the micelle by temperature increase. The copolymer is not branched or crosslinked. The micelles may be thermally responsive micelles, the thermoresponsive nature of these polymers is derived from the lower critical solution temperature (LCST) of the N-alkyl acrylamide monomers used in their preparation, in particular N-isopropyl acrylamide. The polymers contain a carboxylic acid-containing second monomer.

US 7,316,816 B2 discloses temperature and pH sensitive amphiphilic linear copolymers. The copolymers comprise at least three types of monomeric units: a temperature-sensitive monomer, a hydrophilic monomer, and a hydrophobic monomer comprising at least one pH-sensitive moiety; wherein said hydrophobic monomeric unit is derived from a copolymerisable unsaturated fatty acid. The molecular weight may be reduced by the use of a chain transfer agent. The copolymers can be arranged into core-shell structures with a hydrophobic core, wherein the core may contain a hydrophobic (pharmaceutically) active ingredient. Upon change of the external conditions (e.g. temperature or pH), the entrapped ingredient can be released.

WO 2008/019984 discloses amphiphilic linear block copolymers, a process for making the same, and its use in emulsions. The block copolymers comprise a hydrophilic block and a hydrophobic block and can be used as an emulsifier or as a co-emulsifier, particularly in water-in-oil emulsions. The polymers are composed of N-vinyl pyrollidone/N-alkyl acrylamine copolymerised with an alkyl(meth)acrylate.

US 2004/0052746 A1 discloses polymers that are amino-functional terpolymers to produce the necessary association at the desired pH range. The polymers are the product of a monomer mixture comprising at least one amino-substituted vinyl monomer; at least one nonionic vinyl monomer; at least one associative vinyl monomer; at least one semihydrophobic vinyl surfactant monomer; and, optionally, comprising one or more hydroxy-substituted nonionic vinyl monomers, polyunsaturated crosslinking monomer (when present then at a most preferred concentration of 0.1-1 wt% of the monomer mixture), chain transfer agent (when present then at a concentration of at least 0.1 wt% of the monomer mixture), or polymeric stabilizer. These vinyl addition polymers have a combination of substituents, including amino substituents that provide cationic properties at low pH, hydrophobic substituents, hydrophobically modified polyoxyalkylene substituents, and hydrophilic polyoxyalkylene substituents. The polymers are rheology modifiers, by increase of viscosity when applied in emulsions at low pH, and are compatible with cationic materials.

US 2006/0183822 A1 discloses an ampholytic copolymer, and polyelectrolyte complexes which comprise such an ampholytic copolymer, and to cosmetic or pharmaceutical compositions which comprise at least one ampholytic copolymer or one polyelectrolyte complex. The copolymer is composed of a balanced proportion of anionic/cationic monomers, an amide-containing polymer, a hydrophobic monomer, and optionally a crosslinker (e.g. a diethylenically unsaturated compound), and/or a chain transfer agent. The polymers are rheology modifiers (thickeners) and film-form in personal care applications.

WO 2002/047665 discloses a method for stabilising emulsions (water-in-oil or oil-in-water) by polymer particles which will adhere to the interface of the droplets. The solid particles have a size of approximately 1 micrometer. The emulsion droplets can be further stabilised by some form of crosslinking between the particles, e.g. by a sintering process. Emulsions are formed via the use of crosslinked polymer beads, the beads can then be further reacted to give a hard shell by ionic interactions with a suitable polyelectrolyte. The polymers are not soluble or branched and they do not show responsive behaviour upon changing conditions.

GB 2 403 920 A discloses the use of particulates (diameter preferably 0.05-5 micrometer) as Pickering emulsifiers in an oil-in water or water-in-oil emulsion. The particulates comprise at least one polymer (latex), wherein the hydrophilic/hydrophobic balance of the polymer can be varied on application of a stimulus (e.g. pH change from a pH above the pKa of the polymer to a pH below the pKa of the polymer) to break the emulsion, or to cause phase inversion. No chain transfer agent is used in the production of the polymers.

EP 1 726 600 A1 discloses compositions comprising an oil phase, an aqueous phase, at least one emulsifying system of water-in-oil type, optionally at least one emulsifying system of oil-in-water type, in the form of an inverse latex comprising from 20% to 70% by mass of a branched or crosslinked polyelectrolyte. The polyelectrolyte is a copolymer of 2-acrylamido-2-methylpropanesulfonic acid partially or totally salified with N,N-dimethylacrylamide and optionally one or more monomers chosen from monomers containing a partially or totally salified weak acid function and/or from neutral monomers other than N,N-dimethylacrylamide. The polyelectrolytes may be crosslinked by a multifunctional monomer, and a chain transfer agent is not used in the production process of the polymers. These polymers are used as emulsifiers and thickeners in cosmetic or pharmaceutical compositions. They increase in viscosity when salt is added to the solution.

Koh and Saunders (Chem. Commun. (2000) 2461) disclosed oil-in-water (O/W) emulsions (1-bromohexadecane in water) exhibiting reversible thermally induced gelation, wherein the emulsifier is a linear graft (comb) copolymer containing poly(N-isopropylacrylamide) as the backbone and pendant poly(ethylene glycol) methacrylate groups (average number molecular weight of 360). The polymer is made by a free radical polymerisation process. Raising the temperature to a value above the lower critical solution temperature of the polymer led to a strong increase in viscosity of the emulsion due to gelation. The reversibility of the process was demonstrated by decrease of the temperature to below 50°C, leading to a strong decrease of the viscosity. The emulsion did not break up on temperature decrease, and some residual flocs of agglomerated emulsion droplets were still present.

US 6,528,575 B1 discloses crosslinked acid-functionalised copolymers obtainable by precipitation polymerization of monomer mixtures, comprising (a) monoethylenically unsaturated C₃-C₈ carboxylic acids, their anhydrides or mixtures of said carboxylic acids and anhydrides, (b) compounds with at least 2 non-conjugated ethylenic double bonds in the molecule as crosslinkers and possibly (c) other monoethylenically unsaturated monomers which are copolymerizable with monomers (a) and (b), in the presence of free-radical polymerization initiators and from 0.1 to 20% by weight, based on the monomers used, of saturated, nonionic surface-active compounds. These polymers are crosslinked, and produced via a precipitation route without the presence of a chain transfer agent. The polymers are used as stabiliser in oil-in-water emulsions in amounts of from 0.01 to 5% of the weight of the emulsions. Cosmetic and pharmaceutical formulations based on oil-in-water emulsions which contain said precipitation polymers are also disclosed. The polymers are non-hydrogen bonding (non-associative ).

US 6,020,291 discloses aqueous metal working fluids used as lubricant in metal cutting operations. The fluids contain a mist suppressing branched copolymer, including hydrophobic and hydrophilic monomers, and optionally a monomer comprising two or more ethylenically unsaturated bonds. Optionally, the metal working fluid may be an oil-in-water emulsion. The polymers are based on poly(acrylamides) containing sulfonate-containing and hydrophobically modified monomers. They are cross-linked to a very small extent by using very low amount of bis-acrylamide, without using a chain transfer agent.

Non-pre published patent application no. PCT/EP2007/063615 discloses branched polymers which are slightly basic. At low pH these polymers are protonated and well soluble in water. Upon increase of the pH the basic residues of the polymer are deprotonated and therewith they become more hydrophobic. Due to these hydrophobic groups the polymer collapses into a hydrophobic core surrounded by a hydrophilic shell, comprising ethylene oxide groups, forming a small particle. This hydrophilic shell keeps the particles in solution, and these particles can be used as Pickering emulsifiers.

A disadvantage of the use of linear polymers according to the prior art, is that they do not stabilise emulsions well. Linear polymers should be made in a very controlled manner in order to make a block-like structure. This makes the production process complex. Moreover many polymers that are crosslinked rather than branched are microgels crosslinked to have a large molecular weight, and consequently they do not truly dissolve, and are difficult to process. Consequently this may lead to rheology modification by increase of viscosity which can be disadvantageous.

Therefore it is an object of the present invention to provide polymeric emulsifiers that can be used to stabilise emulsions, without thickening and modifying the rheology of the dispersions. A further object is to provide emulsions which contain functional ingredients in the dispersed phase, and wherein the emulsion is stable upon storage. Upon change of the external conditions the functional ingredients should be released from the dispersed phase. Another object of the present invention is to provide concentrated stable emulsions, wherein the concentration of the dispersed phase is high.

Now we have developed amphiphilic branched polymers that can efficiently stabilise emulsions. The amphiphilic branched polymers comprise residues of a monounsaturated monomer, a polyunsaturated monomer, and a chain transfer agent. One or more of these monomers comprise a moiety that is capable to form a non-covalent bond with another of the monomers. The polymers according to the invention could be used as an emulsifier. Upon change in external conditions, e.g. of the solution pH or of the temperature, the emulsion droplets might aggregate in response to these changes, while the emulsion droplets remain dispersed in a continuous phase. The branched polymers are capable of associating via for example hydrogen bonding between adjacent emulsion droplets. The emulsion can be considered to be a responsive assembling emulsion, due to the response of the polymer onto the changing conditions.

In another embodiment the emulsions comprising the polymers may demulsify in response to these changes, therewith facilitating the release of a compound entrapped in the dispersed phase. In this way a method is provided by which a controlled aggregation and disassembly of emulsion droplets can be achieved. The responsive behaviour is due to the formation and break-up of non-covalent bonds between the residues, depending on external conditions like pH or temperature.

Accordingly in a first aspect the invention provides an amphiphilic branched copolymer obtainable by an addition polymerisation process, said polymer comprising:
a) at least one ethyleneically monounsaturated monomer;
b) at least one ethyleneically polyunsaturated monomer;
c) at least one residue of a chain transfer agent and optionally a residue of an initiator; and,
d) at least two chains formed from (a) being covalently linked, other than at their ends, by a bridge at residue (b)
wherein:
i) at least one of (a)-(c) comprises a hydrophilic residue;
ii) at least one of (a)-(c) comprises a hydrophobic residue;
iii) the mole ratio of (b) to (a) is in the range of 1:100 to 1:4; and,
iv) at least one of (a)-(c) comprises a moiety capable of forming a non-covalent bond with at least one of (a)-(c).

In a second aspect the invention provides a method of preparing a branched amphiphilic copolymer according to the first aspect of the invention by an addition polymerisation process,
preferably a free-radical polymerisation process,
which comprises forming an admixture of:
(a) at least one ethyleneically monounsaturated monomer;
(b) from 1 to 25 mole% (based on the number of moles of monofunctional monomer(s)) of at least one ethyleneically polyunsaturated monomer;
(c) a chain transfer agent; and
(d) an initiator, optionally but preferably a free-radical initiator;
and reacting said mixture to form a branched copolymer.

In a third aspect the invention provides an oil/water-emulsion comprising a branched copolymer according to the invention at the oil-water interface.

A fourth aspect of the invention provides a method of preparing an emulsion according to the third aspect of the invention, comprising a step wherein an aqueous solution of a polymer according to the first aspect of the invention is mixed with a hydrophobic liquid, at conditions where the moiety of at least one of the monounsaturated monomer(s) and polyunsaturated monomer(s) and chain transfer agent does not form a non-covalent bond with any of the monounsaturated monomer(s) and polyunsaturated monomer(s) and chain transfer agent.

One or more of these monomers comprise a moiety that is capable to form a non-covalent bond with another of the monomers.

A fifth aspect of the invention provides the use of branched copolymer according to the first aspect of the invention as emulsifier.

### Definitions

The following definitions pertain to chemical structures, molecular segments and substituents:
The ethyleneically monounsaturated monomer is also referred to as 'monofunctional monomer', and the ethyleneically polyunsaturated monomer as a 'multifunctional monomer' or 'brancher'.

The term 'alkyl' as used herein refers to a branched or unbranched saturated hydrocarbon group which may contain from 1 to 12 carbon atoms, such as methyl, ethyl, n-propyl, isopropyl, n-butyl, isobutyl, t-butyl, octyl, decyl etc. More preferably, an alkyl group contains from 1 to 6, preferably 1 to 4 carbon atoms. Methyl, ethyl and propyl groups are especially preferred. 'Substituted alkyl' refers to alkyl substituted with one or more substituent groups. Preferably, alkyl and substituted alkyl groups are unbranched.

Typical substituent groups include, for example, halogen atoms, nitro, cyano, hydroxyl, cycloalkyl, alkyl, alkenyl, haloalkyl, alkoxy, haloalkoxy, amino, alkylamino, dialkylamino, formyl, alkoxycarbonyl, carboxyl, alkanoyl, alkylthio, alkylsulfinyl, alkylsulfonyl, alkylsulfonato, arylsulfinyl, arylsulfonyl, arylsulfonato, phosphinyl, phosphonyl, carbamoyl, amido, alkylamido, aryl, aralkyl and quaternary ammonium groups, such as betaine groups. Of these substituent groups, halogen atoms, cyano, hydroxyl, alkyl, haloalkyl, alkoxy, haloalkoxy, amino, carboxyl, amido and quaternary ammonium groups, such as betaine groups, are particularly preferred. When any of the foregoing substituents represents or contains an alkyl or alkenyl substituent group, this may be linear or branched and may contain up to 12, preferably up to 6, and especially up to 4, carbon atoms. A cycloalkyl group may contain from 3 to 8, preferably from 3 to 6, carbon atoms. An aryl group or moiety may contain from 6 to 10 carbon atoms, phenyl groups being especially preferred. A halogen atom may be a fluorine, chlorine, bromine or iodine atom and any group which contains a halo moiety, such as a haloalkyl group, may thus contain any one or more of these halogen atoms.
Terms such as '(meth)acrylic acid' embrace both methacrylic acid and acrylic acid. Analogous terms should be construed similarly.

Terms such as 'alk/aryl' embrace alkyl, alkaryl, aralkyl (e.g. benzyl) and aryl groups and moieties.

Molar percentages are based on the total monofunctional monomer content.

Molecular weights of monomers and polymers are expressed as weight average molecular weights, except where otherwise specified.

### Detailed description

Copolymers according to the invention are capable of stabilising emulsions by acting as an emulsifier. The emulsion are for example water-in-oil emulsions or oil-in-water emulsions, or duplex emulsions as for example oil-in-water-in-oil emulsions. In response to an external stimulus, the polymers may interact by formation of non-covalent bonds, for example hydrogen bonds, a non-covalent bond formed by Van der Waals forces, by ionic interactions, or by pi-pi interaction. The formation of the non-covalent bonds is triggered by changing external conditions of the polymers, like changes in temperature or pH. For example by change of the pH, hydrogen bonds may be formed between different monomer residues of the polymer. This formation of the non-covalent bonds may occur between different polymer molecules or within polymer molecules. If it occurs between different molecules which are located on the interface between different emulsion droplets and continuous phase, this may lead to formation of agglomerated emulsion droplets.

The polymers can also be designed to be responsive in nature and form extremely stable emulsions which can be tuned to either demulsify or aggregate upon external stimuli, including but not limited to temperature, pH and/or ionic strength. Such components are most easily characterised by their application and can be considered to be hydrophilic and/or hydrophobic. The properties of the responsive polymer can be tuned according to the envisaged use, by choice of monomers and external conditions. For example, the permanent hydrophilicity of the polymer can be controlled by choice of chain transfer agent (CTA), i.e. a hydrophobic CTA would lead to an amphiphilic polymer even when the weakly basic moieties are protonated and therefore hydrophilic.

Branched copolymers with more hydrophilic CTAs will result in more complete demulsification. Emulsions stabilised with branched copolymer and hydrophobic CTAs resulted in relatively less demulsification. Thus the extent of demulsification can be 'tuned' by judicious choice of CTA.

When the hydrophobic portion of the polymer particle is responsive the ability of this particle to stabilise emulsions is dependent on the external stimulus. Thus, an emulsion stabilised with a responsive branched copolymer is capable of demulsifying on application of the stimulus. Without wishing to be bound by theory, the driving force for this process is thought to be the particle de-wetting from the emulsion droplet surface on changing from being amphiphilic to purely hydrophilic.

In a preferred embodiment these copolymers comprise functionality that can hydrogen-bond with each other in response to an external stimulus. When using the polymers as emulsifiers, this can cause emulsions droplets to aggregate. Without wishing to be bound by theory, it is believed that the aggregation process is driven by inter-droplet hydrogen bonding interactions and requires the presence of hydrogen-bonding donor and acceptor groups of the branched copolymer. A typical example of this is branched copolymers containing ethyleneglycol and meth(acrylic) acid residues.

An amphiphilic branched copolymer according to the invention is obtainable by an addition polymerisation process, and said polymer comprises
a) at least one ethyleneically monounsaturated monomer;
b) at least one ethyleneically polyunsaturated monomer;
c) at least one residue of a chain transfer agent and optionally a residue of an initiator; and,
d) at least two chains formed from (a) being covalently linked, other than at their ends, by a bridge at residue (b)
wherein:
i) at least one of (a)-(c) comprises a hydrophilic residue;
ii) at least one of (a)-(c) comprises a hydrophobic residue;
iii) the mole ratio of (b) to (a) is in the range of 1:100 to 1:4; and,
iv) at least one of (a)-(c) comprises a moiety capable of forming a non-covalent bond with at least one of (a)-(c).

These amphiphilic branched copolymers are soluble, branched, non-crosslinked addition polymers and include statistical, graft, gradient and alternating branched copolymers. Branched polymers are polymer molecules engineered to have a finite size, unlike cross-linked, polymers which grow while monomer is available and can be arbitrarily large. The polymer according to the invention that comprises at least two chains which are covalently linked by a bridge other than at their ends, is to be understood as a polymer wherein a sample of said polymer comprises on average at least two chains which are covalently linked by a bridge other than at their ends. When a sample of the polymer is made there might be accidentally some polymer molecules which are unbranched, which is inherent to the production method (addition polymerisation process). For the same reason, a small quantity of the polymer might not have a CTA on the chain end.

Preferably the non-covalent bond in the branched copolymer according to the invention is a hydrogen bond, or the non-covalent bond is formed by Van der Waals forces, or the non-covalent bond is formed by ionic interactions, or the non-covalent bond is formed by pi-pi interaction. Most preferred the non-covalent bond in the branched copolymer according to the invention is a hydrogen bond.

The formation of the non-covalent bonds may lead to interactions within a single polymer molecule (for example between two chains or a chain and a bridge). It may also lead to interactions between different polymer molecules. By choosing the monomers, polymers can be designed which show the required response upon change of external conditions.

Preferably at least one of monounsaturated monomer(s) and polyunsaturated monomer(s) and chain transfer agent comprises a moiety that is capable to act as a hydrogen-bond donor, and at least one of monounsaturated monomer(s) and polyunsaturated monomer(s) and chain transfer agent comprises a moiety that is capable to act as a hydrogen-bond acceptor.

Preferably the copolymer according to the invention comprises an acid residue, preferably a carboxylic acid, and an ether residue, preferably an alkylene oxide residue. Preferably the ethyleneically monounsaturated monomer(s), and/or the ethyleneically polyunsaturated monomer(s) comprise an acid residue or an ether residue.

A preferred branched copolymer according to the invention comprises at least two ethyleneically monounsaturated monomers,
wherein one of the ethyleneically monounsaturated monomers is (meth)acrylic acid or a (meth)acrylic acid derivative,
wherein one of the ethyleneically monounsaturated monomers is a poly(ethyleneglycol) (meth)acrylate or a poly(ethyleneglycol) derivative,
and wherein the molar ratio of acid to ethyleneoxide units is between 5:1 and 1:5.

In a more preferred embodiment the molar ratio of acid to ethyleneoxide units is between 2:1 and 1:2, more preferred between 0.66:1 and 1:1.5, mostly preferred about 1:1.

Preferably the molecular weight of the poly(ethyleneglycol) (meth)acrylate or the poly(ethyleneglycol) derivative in this preferred copolymer is between 500 and 10,000 Daltons. In a more preferred embodiment the molecular weight of this monomer is between 1,000 and 10,000, or mostly preferred between 2,000 and 10,000.

An example of a preferred branched copolymer according to the invention is a branched copolymer comprising residues of the ethyleneically monounsaturated monomers methacrylic acid (MAA) and polyethyleneoxide methacrylate (PEO₁ₖMA, wherein the polyethyleneoxide residue has a molecular weight of about 1000 Daltons), the ethyleneically polyunsaturated monomer ethyleneglycol dimethacrylate (EGDMA), and the chain transfer agent dodecanethiol (DDT), and optionally also the residue of the initiator 2,2'-azobisisobutyronitrile (AIBN). Such a polymer is obtainable by an addition polymerisation process. Such a preferred copolymer might be represented as MAA₉₅/(PEO₁ₖMA)₅-EGDMA₁₀-DDT₁₀, in which case the molar ratio between methacrylic acid residues (MAA) and ethylene oxide residues (EO) is about 1:1, and the degree of branching is about 10.
Another preferred branched copolymer might be represented as MAA₉₀/(PEO₁ₖMA)₁₀-EGDMA₁₀-DDT₁₀ branched copolymer, in which case the molar ratio between methacrylic acid residues (MAA) and ethylene oxide residues (EO) is about 1:2, and the degree of branching is about 10.

The hydrophilic monomer may be of high molecular weight, such that at least one of the monofunctional and multifunctional monomers and the chain transfer agent is a hydrophilic residue having a molecular weight of at least 1000 Daltons. Preferably, the hydrophilic component is derived from the multifunctional monomer, more preferably from the chain transfer agent (during conventional free-radical polymerisation) or the initiator, but most preferably from a monofunctional monomer. In all cases, a combination of hydrophilic components is possible and may be desirable.

Higher molecular weight hydrophobic species are typically more hydrophobic than lower molecular weight hydrophobic species. Preferably, the hydrophobic component is derived from the multifunctional monomer, more preferably from the chain transfer agent (during conventional free-radical polymerisation) or the initiator, but most preferably from a monofunctional monomer. In all cases, a combination of hydrophobic components is possible and may be desirable.

The **chain transfer agent** (CTA) is a molecule which is known to reduce molecular weight during a free-radical polymerisation via a chain transfer mechanism. These agents may be any thiol-containing molecule and can be either monofunctional or multifunctional. The agent may be hydrophilic, hydrophobic, amphiphilic, anionic, cationic, neutral, zwitterionic or responsive. The molecule can also be an oligomer or a pre-formed polymer containing a thiol moiety. (The agent may also be a hindered alcohol or similar free-radical stabiliser). Catalytic chain transfer agents such as those based on transition metal complexes such as cobalt bis(borondifluorodimethylglyoximate) (CoBF) may also be used. Suitable thiols include but are not limited to C₂-C₁₈ alkyl thiols such as dodecane thiol, thioglycolic acid, thioglycerol, cysteine and cysteamine. Thiol-containing oligomers or polymers may also be used such as poly(cysteine) or an oligomer or polymer which has been post-functionalised to give a thiol group(s), such as poly(ethyleneglycol) (di)thio glycollate, or a pre-formed polymer functionalised with a thiol group, for example, reaction of an end or side-functionalised alcohol such as poly(propylene glycol) with thiobutyrolactone, to give the corresponding thiol-functionalised chain-extended polymer. Multifunctional thiols may also be prepared by the reduction of a xanthate, dithioester or trithiocarbonate end-functionalised polymer prepared via a Reversible Addition Fragmentation Transfer (RAFT) or Macromolecular Design by the Interchange of Xanthates (MADIX) living radical method. Xanthates, dithioesters, and dithiocarbonates may also be used, such as cumyl phenyldithioacetate. Alternative chain transfer agents may be any species known to limit the molecular weight in a free-radical addition polymerisation including alkyl halides and transition metal salts or complexes. More than one chain transfer agent may be used in combination. When the chain transfer agent is providing the necessary hydrophilicity in the copolymer, it is preferred that the chain transfer agent is hydrophilic and has a molecular weight of at least 1000 Daltons.

Preferably the CTA is a hydrophobic monomer. Hydrophobic CTAs include but are not limited to linear and branched alkyl and aryl (di)thiols such as dodecanethiol, octadecyl mercaptan, 2-methyl-1-butanethiol and 1,9-nonanedithiol. Hydrophobic macro-CTAs (where the molecular weight of the CTA is at least 1000 Daltons) can be prepared from hydrophobic polymers synthesised by RAFT (or MADIX) followed by reduction of the chain end, or alternatively the terminal hydroxyl group of a preformed hydrophobic polymer can be post functionalised with a compound such as thiobutyrolactone.

Hydrophilic CTAs typically contain hydrogen bonding and/or permanent or transient charges. Hydrophilic CTAs include but are not limited to thio-acids such as thioglycolic acid and cysteine, thioamines such as cysteamine and thio-alcohols such as 2-mercaptoethanol, thioglycerol and ethylene glycol mono- (and di-)thio glycollate. Hydrophilic macro-CTAs (where the molecular weight of the CTA is at least 1000 Daltons) can be prepared from hydrophilic polymers synthesised by RAFT (or MADIX) followed by reduction of the chain end, or alternatively the terminal hydroxyl group of a preformed hydrophilic polymer can be post functionalised with a compound such as thiobutyrolactone.

Responsive macro-CTAs (where the molecular weight of the CTA is at least 1000 Daltons) can be prepared from responsive polymers synthesised by RAFT (or MADIX) followed by reduction of the chain end, or alternatively the terminal hydroxyl group of a preformed responsive polymer, such as poly(propylene glycol), can be post functionalised with a compound such as thiobutyrolactone.

The residue of the chain transfer agent may comprise 0 to 80 mole %, preferably 0 to 50 mole %, more preferably 0 to 40 mole % and especially 0.05 to 30 mole %, of the copolymer (based on the number of moles of monofunctional monomer).

The **initiator** is a free-radical initiator and can be any molecule known to initiate free-radical polymerisation such as azo-containing molecules, persulfates, redox initiators, peroxides, benzyl ketones. These may be activated via thermal, photolytic or chemical means. Examples of these include but are not limited to 2,2'-azobisisobutyronitrile (AIBN), azobis(4-cyanovaleric acid), benzoyl peroxide, cumylperoxide, 1-hydroxycyclohexyl phenyl ketone, hydrogen peroxide/ascorbic acid. Iniferters such as benzyl-N,N-diethyldithiocarbamate can also be used. In some cases, more than one initiator may be used. The initiator may be a macroinitiator having a molecular weight of at least 1000 Daltons. In this case, the macroinitiator may be hydrophilic, hydrophobic, or responsive.

Preferably, the residue of the initiator in a free-radical polymerisation comprises 0 to 5% w/w, preferably 0.01 to 5% w/w and especially 0.01 to 3% w/w, of the copolymer based on the total weight of the monomers.

The use of a chain transfer agent and an initiator is preferred. However, some molecules can perform both functions.

Hydrophilic macroinitiators (where the molecular weight of the preformed polymer is at least 1000 Daltons) can be prepared from hydrophilic polymers synthesised by RAFT (or MADIX), or the terminal hydroxyl group of a preformed hydrophilic polymer can be post-functionalised with a compound such as 2-bromoisobutyryl bromide for use in Atom Transfer Radical Polymerisation (ATRP) with a suitable low valency transition metal catalyst, such as CuBrBipyridyl.

Hydrophobic macroinitiators (where the molecular weight of the preformed polymer is at least 1000 Daltons) can be prepared from hydrophobic polymers synthesised by RAFT (or MADIX), or the terminal hydroxyl group of a preformed hydrophilic polymer can be post-functionalised with a compound such as 2-bromoisobutyryl bromide for use with ATRP.

Responsive macroinitiators (where the molecular weight of the preformed polymer is at least 1000 Daltons) can be prepared from responsive polymers synthesised by RAFT (or MADIX), or the terminal hydroxyl group of a preformed hydrophilic polymer can be post-functionalised with a compound such as 2-bromoisobutyryl bromide bromide for use with ATRP.

Preferably, the macroinitiator is hydrophilic.

The **monofunctional monomer** may comprise any carbon-carbon unsaturated compound which can be polymerised by an addition polymerisation mechanism, e.g. vinyl and allyl compounds. The monofunctional monomer may be hydrophilic, hydrophobic, amphiphilic, anionic, cationic, neutral or zwitterionic in nature. The monofunctional monomer may be selected from but not limited to monomers such as vinyl acids, vinyl acid esters, vinyl aryl compounds, vinyl acid anhydrides, vinyl amides, vinyl ethers, vinyl amines, vinyl aryl amines, vinyl nitriles, vinyl ketones, and derivatives of the aforementioned compounds as well as corresponding allyl variants thereof. Other suitable monofunctional monomers include hydroxyl-containing monomers and monomers which can be post-reacted to form hydroxyl groups, acid-containing or acid-functional monomers, zwitterionic monomers and quaternised amino monomers. Oligomeric, polymeric and di- or multi-functionalised monomers may also be used, especially oligomeric or polymeric (meth)acrylic acid esters such as mono(alk/aryl) (meth)acrylic acid esters of polyalkyleneglycol or polydimethylsiloxane or any other mono-vinyl or allyl adduct of a low molecular weight oligomer. Mixtures of more than one monomer may also be used to give statistical, graft, gradient or alternating copolymers.

Vinyl acids and derivatives thereof include (meth)acrylic acid, fumaric acid, maleic acid, itaconic acid and acid halides thereof such as (meth)acryloyl chloride. Vinyl acid esters and derivatives thereof include C₁-C₂₀ alkyl(meth)acrylates (linear & branched) such as methyl (meth)acrylate, stearyl (meth)acrylate and 2-ethyl hexyl (meth)acrylate, aryl(meth)acrylates such as benzyl (meth)acrylate, tri(alkyloxy)silylalkyl(meth)acrylates such as trimethoxysilylpropyl(meth)acrylate and activated esters of (meth)acrylic acid such as N-hydroxysuccinamido (meth)acrylate. Vinyl aryl compounds and derivatives thereof include styrene, acetoxystyrene, styrene sulfonic acid, vinyl pyridine, vinylbenzyl chloride and vinyl benzoic acid. Vinyl acid anhydrides and derivatives thereof include maleic anhydride. Vinyl amides and derivatives thereof include (meth)acrylamide, N-(2-hydroxypropyl)methacrylamide, N-vinyl pyrrolidone, N-vinyl formamide, (meth)acrylamidopropyl trimethyl ammonium chloride, [3-((meth)acrylamido)propyl]dimethyl ammonium chloride, 3-[N-(3-(meth)acrylamidopropyl)-N,N-dimethyl]aminopropane sulfonate, methyl (meth)acrylamidoglycolate methyl ether and N-isopropyl(meth)acrylamide. Vinyl ethers and derivatives thereof include methyl vinyl ether. Vinyl amines and derivatives thereof include dimethylaminoethyl (meth)acrylate, diethylaminoethyl (meth)acrylate, diisopropylaminoethyl (meth)acrylate, mono-t-butylaminoethyl (meth)acrylate, morpholinoethyl(meth)acrylate and monomers which can be post-reacted to form amine groups, such as vinyl formamide. Vinyl aryl amines and derivatives thereof include vinyl aniline, vinyl pyridine, N-vinyl carbazole and vinyl imidazole. Vinyl nitriles and derivatives thereof include (meth)acrylonitrile. Vinyl ketones and derivatives thereof include acreolin.

Hydroxyl-containing monomers include vinyl hydroxyl monomers such as hydroxyethyl (meth)acrylate, hydroxy propyl (meth)acrylate, glycerol mono(meth)acrylate and sugar mono(meth)acrylates such as glucose mono(meth)acrylate. Monomers which can be post-reacted to form hydroxyl groups include vinyl acetate, acetoxystyrene and glycidyl (meth)acrylate. Acid-containing or acid functional monomers include (meth)acrylic acid, styrene sulfonic acid, vinyl phosphonic acid, vinyl benzoic acid, maleic acid, fumaric acid, itaconic acid, 2-(meth)acrylamido 2-ethyl propanesulfonic acid, mono-2-((meth)acryloyloxy)ethyl succinate and ammonium sulfatoethyl (meth)acrylate. Zwitterionic monomers include (meth)acryloyl oxyethylphosphoryl choline and betaines, such as [2-((meth)acryloyloxy)ethyl] dimethyl-(3-sulfopropyl)ammonium hydroxide. Quaternised amino monomers include (meth)acryloyloxyethyltri-(alk/aryl)ammonium halides such as (meth)acryloyloxyethyltrimethyl ammonium chloride.

Oligomeric and polymeric monomers include oligomeric and polymeric (meth)acrylic acid esters such as mono(alk/aryl)oxypolyalkyleneglycol(meth)acrylates and mono(alk/aryl)oxypolydimethyl-siloxane(meth)acrylates. These esters include monomethoxy oligo(ethyleneglycol) mono(meth)acrylate, monomethoxy oligo(propyleneglycol) mono(meth)acrylate, monohydroxy oligo(ethyleneglycol) mono(meth)acrylate, monohydroxy oligo(propyleneglycol) mono(meth)acrylate, monomethoxy poly(ethyleneglycol) mono(meth)acrylate, monomethoxy poly(propyleneglycol) mono(meth)acrylate, monohydroxy poly(ethyleneglycol) mono(meth)acrylate and monohydroxy poly(propyleneglycol) mono(meth)acrylate. Further examples include vinyl or allyl esters, amides or ethers of pre-formed oligomers or polymers formed via ring-opening polymerisation such as oligo(caprolactam), oligo(caprolactone), poly(caprolactam) or poly(caprolactone), or oligomers or polymers formed via a living polymerisation technique such as poly(1,4-butadiene).

The corresponding allyl monomers to those listed above can also be used where appropriate.

Examples of **monofunctional monomers** are:
amide-containing monomers such as (meth)acrylamide, N-(2-hydroxypropyl)methacrylamide, N,N'-dimethyl(meth)acrylamide, N and/or N'-di(alkyl or aryl) (meth)acrylamide, N-vinyl pyrrolidone, [3-((meth)acrylamido)propyl] trimethyl ammonium chloride, 3-(dimethylamino)propyl(meth)acrylamide, 3-[N-(3-(meth)acrylamidopropyl)-N,N-dimethyl]aminopropane sulfonate, methyl (meth)acrylamidoglycolate methyl ether and N-isopropyl(meth)acrylamide; (Meth)acrylic acid and derivatives thereof such as (meth)acrylic acid, (meth)acryloyl chloride (or any halide), (alkyl/aryl)(meth)acrylate, functionalised oligomeric or polymeric monomers such as monomethoxy oligo(ethyleneglycol) mono(meth)acrylate, monomethoxy oligo(propyleneglycol) mono(meth)acrylate, monohydroxy oligo(ethyleneglycol) mono(meth)acrylate, monohydroxy oligo(propyleneglycol) mono(meth)acrylate.monomethoxy poly(ethyleneglycol) mono(meth)acrylate, monomethoxy poly(propyleneglycol) mono(meth)acrylate, monohydroxy poly(ethyleneglycol) mono(meth)acrylate, monohydroxy poly(propyleneglycol) mono(meth)acrylate. glycerol mono(meth)acrylate and sugar mono(meth)acrylates such as glucose mono(meth)acrylate; vinyl amines such as aminoethyl (meth)acrylate, dimethylaminoethyl (meth)acrylate, diethylaminoethyl (meth)acrylate, diisopropylaminoethyl (meth)acrylate, mono-t-butylamino (meth)acrylate, morpholinoethyl(meth)acrylate, vinyl aryl amines such as vinyl aniline, vinyl pyridine, N-vinyl carbazole, vinyl imidazole, and monomers which can be post-reacted to form amine groups, such as vinyl formamide; vinyl aryl monomers such as styrene, vinyl benzyl chloride, vinyl toluene, α-methyl styrene, styrene sulfonic acid and vinyl benzoic acid; vinyl hydroxyl monomers such as hydroxyethyl (meth)acrylate, hydroxy propyl (meth)acrylate, glycerol mono(meth)acrylate or monomers which can be post-functionalised into hydroxyl groups such as vinyl acetate, acetoxy styrene and glycidyl (meth)acrylate;
acid-containing monomers such as (meth)acrylic acid, styrene sulfonic acid, vinyl phosphonic acid, vinyl benzoic acid, maleic acid, fumaric acid, itaconic acid, 2-(meth)acrylamido 2-ethyl propanesulfonic acid and mono-2-((meth)acryloyloxy)ethyl succinate or acid anhydrides such as maleic anhydride; zwitterionic monomers such as (meth)acryloyl oxyethylphosphoryl choline and betaine-containing monomers, such as [2-((meth)acryloyloxy)ethyl] dimethyl-(3-sulfopropyl)ammonium hydroxide;
quaternised amino monomers such as (meth)acryloyloxyethyltrimethyl ammonium chloride.

The corresponding allyl monomer, where applicable, can also be used in each case.

Functional monomers, i.e. monomers with reactive pendant groups which can be post or pre-modified with another moiety following polymerisation can also be used such as glycidyl (meth)acrylate, tri(alkoxy)silylalkyl(meth)acrylates such as trimethoxysilylpropyl(meth)acrylate, (meth)acryloyl chloride, maleic anhydride, hydroxyalkyl (meth)acrylates, (meth)acrylic acid, vinylbenzyl chloride, activated esters of (meth)acrylic acid such as N-hydroxysuccinamido (meth)acrylate and acetoxystyrene.

Macromonomers (monomers having a molecular weight of at least 1000 Daltons) are generally formed by linking a polymerisable moiety, such as a vinyl or allyl group, to a pre-formed monofunctional polymer via a suitable linking unit such as an ester, an amide or an ether. Examples of suitable polymers include mono functional poly(alkylene oxides) such as monomethoxy[poly(ethyleneglycol)] or monomethoxy[poly(propyleneglycol)], silicones such as poly(dimethylsiloxane)s, polymers formed by ring-opening polymerisation such as poly(caprolactone) or poly(caprolactam) or mono-functional polymers formed via living polymerisation such as poly(1,4-butadiene).

Preferred macromonomers include monomethoxy[poly(ethyleneglycol)] mono(methacrylate), monomethoxy[poly(propyleneglycol)] mono(methacrylate) and mono(meth)acryloxypropyl-terminated poly(dimethylsiloxane).

When the monofunctional monomer is providing the necessary hydrophilicity in the copolymer, it is preferred that the monofunctional monomer is a residue of a hydrophilic monofunctional monomer, preferably having a molecular weight of at least 1000 Daltons.

Hydrophilic monofunctional monomers include (meth)acryloyl chloride, N-hydroxysuccinamido (meth)acrylate, styrene sulfonic acid, maleic anhydride, (meth)acrylamide, N-(2-hydroxypropyl)methacrylamide, N-vinyl pyrrolidinone, N-vinyl formamide, quaternised amino monomers such as (meth)acrylamidopropyl trimethyl ammonium chloride, [3-((meth)acrylamido)propyl]trimethyl ammonium chloride and (meth)acryloyloxyethyltrimethyl ammonium chloride, 3-[N-(3-(meth)acrylamidopropyl)-N,N-dimethyl]aminopropane sulfonate, methyl (meth)acrylamidoglycolate methyl ether, glycerol mono(meth)acrylate, monomethoxy and monohydroxy oligo(ethylene oxide) (meth)acrylate, sugar mono(meth)acrylates such as glucose mono(meth)acrylate, (meth)acrylic acid, vinyl phosphonic acid, fumaric acid, itaconic acid, 2-(meth)acrylamido 2-ethyl propanesulfonic acid, mono-2-((meth)acryloyloxy)ethyl succinate, ammonium sulfatoethyl (meth)acrylate, (meth)acryloyl oxyethylphosphoryl choline and betaine-containing monomers such as [2-((meth)acryloyloxy)ethyl] dimethyl-(3-sulfopropyl)ammonium hydroxide. Hydrophilic macromonomers may also be used and include monomethoxy and monohydroxy poly(ethylene oxide) (meth)acrylate and other hydrophilic polymers with terminal functional groups which can be post-functionalised with a polymerisable moiety such as (meth)acrylate, (meth)acrylamide or styrenic groups.

Hydrophobic monofunctional monomers include C₁-C₂₀ alkyl (meth)acrylates (linear and branched and (meth)acrylamides, such as methyl (meth)acrylate and stearyl (meth)acrylate, aryl(meth)acrylates such as benzyl (meth)acrylate, tri(alkyloxy)silylalkyl(meth)acrylates such as trimethoxysilylpropyl(meth)acrylate, styrene, acetoxystyrene, vinylbenzyl chloride, methyl vinyl ether, vinyl formamide, (meth)acrylonitrile, acreolin, 1- and 2-hydroxy propyl (meth)acrylate, vinyl acetate, and glycidyl (meth)acrylate. Hydrophobic macromonomers may also be used and include monomethoxy and monohydroxy poly(butylene oxide) (meth)acrylate and other hydrophobic polymers with terminal functional groups which can be post-functionalised with a polymerisable moiety such as (meth)acrylate, (meth)acrylamide or styrenic groups.

Responsive monofunctional monomers include (meth)acrylic acid, 2- and 4-vinyl pyridine, vinyl benzoic acid, N-isopropyl(meth)acrylamide, tertiary amine (meth)acrylates and (meth)acrylamides such as 2-(dimethyl)aminoethyl (meth)acrylate, 2-(diethylamino)ethyl (meth)acrylate, diisopropylaminoethyl (meth)acrylate, mono-t-butylaminoethyl (meth)acrylate and N-morpholinoethyl (meth)acrylate, vinyl aniline, vinyl pyridine, N-vinyl carbazole, vinyl imidazole, hydroxyethyl (meth)acrylate, hydroxypropyl (meth)acrylate, maleic acid, fumaric acid, itaconic acid and vinyl benzoic acid. Responsive macromonomers may also be used and include monomethoxy and monohydroxy poly(propylene oxide) (meth)acrylate and other responsive polymers with terminal functional groups which can be post-functionalised with a polymerisable moiety such as (meth)acrylate, (meth)acrylamide or styrenic groups.

The multifunctional monomer or brancher may comprise a molecule containing at least two vinyl groups which may be polymerised via addition polymerisation. The molecule may be hydrophilic, hydrophobic, amphiphilic, neutral, cationic, zwitterionic, oligomeric or polymeric. Such molecules are often known as crosslinking agents in the art and may be prepared by reacting any di- or multifunctional molecule with a suitably reactive monomer. Examples include di- or multivinyl esters, di- or multivinyl amides, di- or multivinyl aryl compounds, di- or multivinyl alk/aryl ethers. Typically, in the case of oligomeric or polymeric di- or multifunctional branching agents, a linking reaction is used to attach a polymerisable moiety to a di- or multifunctional oligomer or polymer. The brancher may itself have more than one branching point, such as T-shaped divinylic oligomers or polymers. In some cases, more than one multifunctional monomer may be used. When the multifunctional monomer is providing the necessary hydrophilicity in the copolymer, it is preferred that the multifunctional monomer has a molecular weight of at least 1000 Daltons.

The corresponding allyl monomers to those listed above can also be used where appropriate.

Preferred **multifunctional monomers** include but are not limited to divinyl aryl monomers such as divinyl benzene; (meth)acrylate diesters such as ethylene glycol di(meth)acrylate, propyleneglycol di(meth)acrylate and 1,3-butylenedi(meth)acrylate; polyalkylene oxide di(meth)acrylates such as tetraethyleneglycol di(meth)acrylate, poly(ethyleneglycol) di(meth)acrylate and poly(propyleneglycol) di(meth)acrylate; divinyl (meth)acrylamides such as methylene bisacrylamide; silicone-containing divinyl esters or amides such as (meth)acryloxypropyl-terminated poly(dimethylsiloxane); divinyl ethers such as poly(ethyleneglycol)divinyl ether; and tetra- or tri-(meth)acrylate esters such as pentaerythritol tetra(meth)acrylate, trimethylolpropane tri(meth)acrylate or glucose di- to penta(meth)acrylate. Further examples include vinyl or allyl esters, amides or ethers of pre-formed oligomers or polymers formed via ring-opening polymerisation such as oligo(caprolactam), oligo(caprolactone), poly(caprolactam) or poly(caprolactone), or oligomers or polymers formed via a living polymerisation technique such as oligo- or poly(1,4-butadiene).

Macrocrosslinkers or macrobranchers (multifunctional monomers having a molecular weight of at least 1000 Daltons) are generally formed by linking a polymerisable moiety, such as a vinyl or aryl group, to a pre-formed multifunctional polymer via a suitable linking unit such as an ester, an amide or an ether. Examples of suitable polymers include di-functional poly(alkylene oxides) such as poly(ethyleneglycol) or poly(propyleneglycol), silicones such as poly(dimethylsiloxane)s, polymers formed by ring-opening polymerisation such as poly(caprolactone) or poly(caprolactam) or polyfunctional polymers formed via living polymerisation such as poly(1,4-butadiene).

Preferred macrobranchers include poly(ethyleneglycol) di(meth)acrylate, poly(propyleneglycol) di(meth)acrylate, methacryloxypropyl-terminated poly(dimethylsiloxane), poly(caprolactone) di(meth)acrylate and poly(caprolactam) di(meth)acrylamide.

Branchers include methylene bisacrylamide, glycerol di(meth)acrylate, glucose di- and tri(meth)acrylate, oligo(caprolactam) and oligo(caprolactone). Multi end-functionalised hydrophilic polymers may also be functionalised using a suitable polymerisable moiety such as a (meth)acrylate, (meth)acrylamide or styrenic group.

Further branchers include divinyl benzene, (meth)acrylate esters such as ethyleneglycol di(meth)acrylate, propyleneglycol di(meth)acrylate and 1,3-butylene di(meth)acrylate, oligo(ethylene glycol) di(meth)acrylates such as tetraethylene glycol di(meth)acrylate, tetra- or tri- (meth)acrylate esters such as pentaerthyritol tetra(meth)acrylate, trimethylolpropane tri(meth)acrylate and glucose penta(meth)acrylate. Multi end-functionalised hydrophobic polymers may also be functionalised using a suitable polymerisable moiety such as a (meth)acrylate, (meth)acrylamide or styrenic group.

Multifunctional responsive polymers may also be functionalised using a suitable polymerisable moiety such as a (meth)acrylate, (meth)acrylamide or styrenic group such as poly(propylene oxide) di(meth)acrylate.

### Method for production

In a second aspect the invention provides a method of preparing a branched amphiphilic copolymer according to any one of the preceding claims by an addition polymerisation process,
preferably a free-radical polymerisation process,
which comprises forming an admixture of
(a) at least one ethyleneically monounsaturated monomer;
(b) from 1 to 25 mole% (based on the number of moles of monofunctional monomer(s)) of at least one ethyleneically polyunsaturated monomer;
(c) a chain transfer agent; and
(d) an initiator, optionally but preferably a free-radical initiator;
and reacting said mixture to form a branched copolymer.

The copolymer is prepared by an addition polymerisation method, which is a conventional free-radical polymerisation technique using a chain transfer agent.

To produce a branched polymer by a conventional radical polymerisation process, a monofunctional monomer is polymerised with a multifunctional monomer or branching agent in the presence of a chain transfer agent and free-radical initiator.

The polymerisations may proceed via solution, bulk, suspension, dispersion or emulsion procedures.

### Emulsions

In a third aspect the invention provides an oil/water emulsion comprising a branched copolymer according to the invention at the oil-water interface. Hence another aspect of the invention is to provide the use of the branched copolymer according to the first aspect of the invention as emulsifier.

Preferably the average size of the droplets in the emulsion is smaller than 20 micrometer, more preferably smaller than 10 micrometer. Preferably the emulsion is an oil-in-water emulsion.

In a preferred embodiment the emulsion comprises an active ingredient, wherein the active ingredient is incorporated in the dispersed phase.

The invention also provides in it's fourth aspect a method of preparing such an emulsion, comprising a step wherein an aqueous solution of a preferred polymer according to the first aspect of the invention is mixed with a hydrophobic liquid at conditions where the moiety of at least one of the monounsaturated monomer(s) and polyunsaturated monomer(s) and chain transfer agent does not form a non-covalent bond with any of the monounsaturated monomer(s) and polyunsaturated monomer(s) and chain transfer agent. Under these conditions the polymer is in a non-interacting form, and the emulsion that is produced using this method is in a non-aggregated state. That means that the emulsion droplets are freely dispersed in the emulsion. The hydrophobic liquid may contain an active ingredient, such as for example a drug or a fragrance.

Preferably such a method of preparing an emulsion comprises a step wherein an aqueous solution of a preferred polymer according to the first aspect of the invention is mixed with a hydrophobic liquid at a pH above the pKa of the polymer. In this preferred method preferably a polymer is applied in which the non-covalent bond that may be formed upon change of the external conditions is a hydrogen bond.

Such an oil/water emulsion comprising a preferred polymer according to the first aspect of the invention may be prepared using any common equipment for this purpose, like high shear mixers, or homogenisers, or any other commonly known apparatus. An oil or hydrophobic material is slowly poured into an aqueous solution of the polymer. By the mixing process the oil droplets are evenly dispersed, and the polymer will act as emulsifier which keeps the emulsion stable. When the pH of the emulsion is above the pKa of the polymer the oil droplets will disperse homogeneously in the aqueous phase, and the emulsion will be stable.

Upon change of the external conditions the emulsion according to the third aspect of the invention might demulsify, and therewith release of entrapped ingredients from the emulsion droplets can be achieved. An example of such a change of external conditions is that a stable oil-in-water emulsion can be formed at low pH, and after increase of the pH, the emulsion breaks up due to demulsification.

If in a preferred embodiment the degree of branching of the polymer may influence the pKa of a branched polymer comprising weakly basic moieties; the pKa may decrease when the degree of branching of the polymer increases. Therefore, amongst other applications, these polymers can regulate the pH of a solution as a function of their concentration and degree of branching. Thus, essentially identical polymers can promote the release of hydrophobic actives at different pH values simply by varying the degree of branching.

In a preferred embodiment of the third aspect of the invention, the dispersed phase of the emulsion is aggregated. The aggregation is triggered by response to external stimuli. Preferably the average size of the agglomerates is larger than 100 micrometer, more preferably larger than 200 micrometer, or even larger than 500 micrometer. They can also be millimeter or centimeter size. The emulsion droplets can aggregate upon external stimuli, for example changes in temperature, pH, or ionic strength. The limit to the size of the aggregates, is the dimensions of the vessel wherein the agglomerated emulsion has been formed. The aggregation may reverse (meaning disaggregate), as a response to reversal of the external stimuli, resulting in a dispersed emulsion.

In a preferred embodiment of the fourth aspect of the invention a method is provided wherein the pH of the aqueous solution of the emulsion is decreased to a value below the pKa of the polymer. Upon correct choice of the monomers, agglomeration of the dispersed phase could be obtained, while the emulsion remains stable. By the decrease of the pH of the emulsion from a value above the pKa to a value below the pKa of the polymer, the functional residues in the polymer aggregate due to the formation of non-covalent bonds. For example the non-covalent bonds might be hydrogen bonds when the polymer contains carboxylic acid and ethylene oxide residues.

An advantage of such an agglomerated emulsion is that the concentration of the dispersed phase in the continuous phase is high, as compared to an emulsion wherein the dispersed phase is not agglomerated.

A preferred polymer according to the invention that might be used as an emulsifier could be represented as MAA₉₅/(PEO₁ₖMA)₅-EGDMA₁₀-DDT₁₀, in which case the molar ratio between methacrylic acid residues (MAA) and ethylene oxide residues (EO) is about 1:1, and the degree of branching is about 10. Without wishing to be bound be theory, it is believed that when the pH of an oil-in-water emulsion comprising this copolymer is above the pKa of the MAA residues, which is about 4.5, the MAA is in its anionic form. The emulsion droplets remain dispersed as single droplets at this pH. When the pH of the emulsion is subsequently reduced to a pH to around 1, which is below the pKa of the MAA residues, the MAA units become protonated (neutral). Both intra- and inter-droplet cross-linking will occur by interactions between MAA and EO residues on the same and surrounding emulsion droplets. The size of the agglomerates can be up to centimeters and is limited by the dimensions of the vessel. The process is reversible, by increasing the solution pH above the pKa of the MAA residues causes the emulsion aggregates to dissociate into individual droplets again.

### EXAMPLES

The present invention will now be explained in more detail by reference to the following non-limiting examples.

In the following examples, copolymers are described using the following nomenclature:
(monofunctional monomer G)_{g} (monofunctional monomer J)ⱼ
(multifunctional monomer L)ₗ (Chain Transfer Agent)_{d}
where the values in subscript are the molar ratios of each constituent normalised to give the monofunctional monomer values as 100, i.e. g + j = 100. The degree of branching or branching level is denoted by I and d refers to the molar ratio of the chain transfer agent.

For example:
Methacrylic acid₁₀₀ Ethyleneglycol dimethacrylate₁₅ Dodecane thiol₁₅ would describe a polymer containing methacrylic acid : ethyleneglycol dimethacrylate : dodecane thiol at a molar ratio of 100:15:15.
Molecular weight determination was performed by GPC using SEC-MALLs on a Wyatt chromatograph with either tetrahydrofuran (THF) or 20% aqueous methanol with 0.05M NaNO₃ adjusted to pH 9 as the organic or aqueous eluants respectively, at a flow rate of 1 ml per minute and a sample injection volume of 100 µl. The instrument was fitted with a Polymer Laboratories PL mixed C and mixed D column set at 40°C. Detection was carried out using a Wyatt Dawn DSP laser photometer with a Jasco RI detector.

### Example 1a

### Synthesis of branched poly[diethylaminoethyl methacrylate-co-poly(ethyleneglycol)₂₂ monomethacrylate-co-ethyleneglycol dimethacrylate]

### DEA₉₅/(PEG₂₂MA)₅EGDMA₁₅DDT₁₅

Diethylaminoethyl methacrylate (DEA) (8.000 g, 43 mmol), PEG₂₂MA (2.162 g, 2.2 mmol), ethyleneglycol dimethacrylate (EGDMA) (1.35 g, 6.8 mmol) and dodecanethiol (DDT) (1.62 mL, 6.8 mmol) were dissolved in ethanol (100 mL) and degassed by nitrogen purge for 30 minutes. After this time the reaction vessel was subjected to a positive nitrogen flow and heated at 60°C. Once the temperature had equilibrated, AIBN (2,2'-azobisisobutyronitrile, 110 mg, 1 wt. % based on total monomer) was added to start the polymerisation and the reaction mixture was left stirring for 18 hours. Ethanol was removed by vacuum distillation and the resulting clear, oily polymers were washed with very cold petroleum. The polymer was dried for 48 hours in a vacuum oven to give 85 % yield.
GPC: M_{W}: 11,900 g.mol⁻¹ calculated from the light scattering signal; Eluant: THF

### Example 1b

### Synthesis of linear poly[diethylaminoethyl methacrylate-co-poly(ethyleneglycol)₂₂ monomethacrylate]

This linear polymer is analogous to the branched copolymer of Example 1a, and was prepared without EGDMA.

### DEA₉₅/(PEG₂₂MA)₅DDT₂.₅

Diethylaminoethyl methacrylate (DEA) (8.000 g, 43 mmol), PEG₂₂MA (2.162 g, 2.2 mmol) and dodecanethiol (DDT) (0.27 mL, 1.1 mmol) were dissolved in ethanol (100 mL) and degassed by nitrogen purge for 30 minutes. After this time the reaction vessel was subjected to a positive nitrogen flow and heated at 60°C. Once the temperature had equilibrated, AIBN (101 mg, 1 wt. % based on total monomer) was added to start the polymerisation and the reaction mixture was left stirring for 40 hours. Ethanol was removed by vacuum distillation and the resulting clear, oily polymers were washed with very cold petroleum. The polymer was dried for 48 hours in a vacuum oven to give 90 % yield.
GPC: M_{W}: 35,300 g.mol⁻¹: calculated from the light scattering detector. Eluant: THF

### Example 2a

### Synthesis of branched poly[dimethylaminoethyl methacrylate-co-poly(ethyleneglycol)₂₂ monomethacrylate-co-ethyleneglycol dimethacrylate]

### DMA₉₅/(PEG₂₂MA)₅EGDMA₁₅TG₁₅

Dimethylaminoethyl methacrylate (DMA) (8.949 g, 57 mmol), PEG₂₂MA (3.000 g, 3 mmol), ethyleneglycol dimethacrylate (EGDMA) (1.782 g, 9 mmol) and thioglycerol (TG) (0.972 mL, 9 mmol) were dissolved in ethanol (120 mL) and degassed by nitrogen purge for 30 minutes. After this time the reaction vessel was subjected to a positive nitrogen flow and heated at 60°C. Once the temperature had equilibrated, AIBN (137 mg, 1 wt. % based on total monomer) was added to start the polymerisation and the reaction mixture was left stirring for 24 hours. Ethanol was removed by vacuum distillation and the resulting clear, oily polymers were washed with very cold petroleum. The polymer was dried for 48 hours in a vacuum oven to give 80 % yield.
GPC: M_{W}: 23,500 g.mol⁻¹ calculated from the light scattering detector. Eluant: THF

### Example 2b

### Synthesis of linear poly[dimethylaminoethyl methacrylate-co-poly(ethyleneglycol)₂₂ monomethacrylate]

This is the linear polymer analogous to the branched copolymer of Example 2a.

### DMA₉₅/(PEG₂₂MA)₅TG_{2.5}

Dimethylaminoethyl methacrylate (DMA) (8.949 g, 57 mmol), PEG₂₂MA (3.000 g, 3 mmol) and thioglycerol (TG) (0.162 g, 1.5 mmol) were dissolved in ethanol (120 mL) and degassed by nitrogen purge for 30 minutes. After this time the reaction vessel was subjected to a positive nitrogen flow and heated at 60°C. Once the temperature had equilibrated, AIBN (120 mg, 1 wt. % based on total monomer) was added to start the polymerisation and the reaction mixture was left stirring for 24 hours. Ethanol was removed by vacuum distillation and the resulting clear, oily polymer was washed with very cold petroleum. The polymer was dried for 48 hours in a vacuum oven to give 80 % yield.
GPC: M_{W}: 16,000 g.mol⁻¹ calculated from the light scattering detector. Eluant: THF

### Example 3

### Effect of chain end on the rate and extent of demulsification for branched polymer emulsifiers

Having prepared emulsions stabilised by the branched copolymers with chain ends with differing hydrophobicities at pH 10, the extent of demulsification was monitored by reducing the solution pH of the emulsion. The degree of branching of the branched copolymers was maintained at '15' (like in example 1a) and a hydrophilic CTA was used, thioglycerol. The composition of the copolymers investigated was:
DEA₉₅/(PEG₂₂MA)₅TG_{2.5} (synthesised as a linear control),
DEA₉₅/(PEG₂₂MA)₅EGDMA_{2.5}TG_{2.5} and DEA₉₅/(PEG₂₂MA)₅EGDMA₁₅TG₁₅, respectively (abbreviations same as in example 1a). These polymers were synthesised in accordance with methods set out in Example 1 a and Example 1 b. Having prepared stable emulsions at pH 10 (50% v/v dodecane in water) demulsification was induced by addition of acid to lower the solution pH to around pH 1. The extent of demulsification (caused by the protonation of the DEA residues) was quantified by measuring the reduction in the creamed emulsion phase after settling for 24 hours.

### Example 4a

### Synthesis of Inter/intramolecular hydrogen bonding branched copolymers

### Synthesis of MAA₉₅/(PEO₁ₖMA)₅-EGDMA₁₀-DDT₁₀ branched copolymer

In this polymer the molar ratio between methacrylic acid residues (MAA) and ethylene oxide residues (EO) is about 1:1, degree of branching is about 10.

Methacrylic acid (MAA, 10g, 95 equivalents), polyethyleneoxide methacrylate (PEO₁ₖMA, 6.732g, 5 equivalents, wherein the polyethyleneoxide residue has a molecular weight of about 1000 Daltons), ethyleneglycol dimethacrylate (EGDMA, 2.302g, 10 equivalents) and dodecanethiol (DDT, 2.349g, 10 equivalents) were added to a round-bottomed flask equipped with magnetic flea and degassed with stirring by nitrogen purge for 15 minutes. Ethanol was degassed separately and added (190mL) to the monomer mixture. The reaction was sealed and heated to 75°C after which time AIBN (190mg) was added to start the polymerisation. The polymerisation was left to proceed for 48 hours after which time ethanol was removed under reduced pressure and the polymer was washed several times with cold (5°C) diethyl ether.

### Example 4b

### Synthesis of MAA₉₀/(PEO₁ₖMA)₁₀-EGDMA₁₀-DDT₁₀ branched copolymer.

In this polymer the molar ratio between methacrylic acid residues (MAA) and ethylene oxide residues (EO) is about 1:2, degree of branching is about 10.
Methacrylic acid (MAA, 11 g, 90 equivalents), polyethyleneoxide methacrylic acid (PEO₁ₖMA, 13.464g, 10 equivalents, wherein the polyethyleneoxide residue has a molecular weight of about 1000 Daltons), ethyleneglycol dimethacrylate (EGDMA, 2.302g, 10 equivalents) and dodecanethiol (DDT, 2.349g, 10 equivalents) were added to a round-bottomed flask equipped with magnetic flea and degassed with stirring by nitrogen purge for 15 minutes. Ethanol was degassed separately and added (190mL) to the monomer mixture. The reaction was sealed and heated to 75°C after which time AIBN (190mg) was added to start the polymerisation. The polymerisation was left to proceed for 48 hours after which time ethanol was removed under reduced pressure and the polymer was washed several times with cold (5°C) diethyl ether.

### Examples 4c and 4d

### Synthesis of MAA₉₅/(PEO₁ₖMA₅)-DDT₁₀ and MAA₉₀/(PEO₁ₖMA)₁₀-DDT₁₀ Linear polymers

Linear examples of polymers from examples 4a and 4b were prepared (examples 4c and 4d, respectively). The polymers were prepared in identical procedures in the absence of the EGDMA brancher.

### Preparation of dodecane-in-water emulsions

A 2.0 w/v% aqueous solution of the MAA₉₅/(PEO₁ₖMA)₅-EGDMA₁₀-DDT₁₀ branched copolymer (synthesised in example 4a) was made by dissolving 100mg of the branched copolymer in 5mL of doubly-distilled water and adjusting the pH to pH 10 using NaOH solution (2M). To this solution was added dodecane (5mL). The emulsion was prepared by homogenising the mixture for 2 minutes at 24,000 rpm, resulting in an emulsion with an average dodecane droplet size of about 10 micrometer. The emulsion was stable during storage.

### Determination of pH-responsive aqueous solution behaviour of the emulsions

In order to determine whether the emulsion droplets, stabilised by a copolymer (as synthesised in example 4a or 4b) acting as emulsifier, agglomerate, laser diffraction (Malvern Mastersizer 2000) was used to determine droplet diameters in dilute aqueous solution. 1 drop of the concentrated dodecane-in-water emulsion was added to water at pH 9 in a dispersion tool until a homogeneous dispersion was obtained (20 seconds). This pH is above the pKa of MAA, which is about 4.5, when the MAA is in its anionic form. In order to determine the oil droplet size, 5 measurements were taken at pH 9, followed by the addition of HCl (0.6mL, 1 M) to reduce the solution pH to around pH 1. This pH is below the pKa of MAA, and the MAA units become protonated (neutral). Measurements were recorded at 30 second intervals and the average droplet diameter was plotted against time for emulsion dispersion stabilised with either MAA₉₅/PEO₁ₖ MA₅-EGDMA₁₀-DDT₁₀ branched copolymer (synthesised in example 4a) or MAA₉₀/PEO_{1K} MA₁₀-EGDMA₁₀-DDT₁₀ branched copolymer (synthesised in example 4b).

This showed that when MAA:EO units are present in 1:2 ratios (as in the copolymer synthesised in example 4b) only intra-droplet cross-linking occurs - that is, only interactions between MAA and EO residues on the same emulsion droplet occurred. The emulsion droplets remained dispersed as single droplets at this concentration.

When MAA:EO units were present in 1:1 ratios (as in the copolymer synthesised in example 4a) both intra- and inter-droplet cross-linking occurs - that is, interactions between MAA and EO residues on the same and surrounding emulsion droplets occurred. This caused the emulsion droplets to aggregate into agglomerates of oil droplets. The process was reversible - that is increasing the solution pH above the pKa of the MAA residues caused the emulsion aggregates to dissociate into individual droplets.

When emulsions were prepared with the linear polymers (examples 4c & 4d) it was found that the emulsions were unstable and did maintain complete structural integrity upon pH-induced droplet assembly.

## Claims

1. An amphiphilic branched copolymer obtainable by an addition polymerisation process, said polymer comprising:
a) at least one ethyleneically monounsaturated monomer;
b) at least one ethyleneically polyunsaturated monomer;
c) at least one residue of a chain transfer agent and optionally a residue of an initiator; and,
d) at least two chains formed from (a) being covalently linked, other than at their ends, by a bridge at residue (b)
wherein:
i) at least one of (a)-(c) comprises a hydrophilic residue
ii) at least one of (a)-(c) comprises a hydrophobic residue;
iii) the mole ratio of (b) to (a) is in the range of 1:100 to 1:4; and,
iv) at least one of (a)-(c) comprises a moiety capable of forming a non-covalent bond with at least one of (a)-(c).

2. A branched copolymer according to claim 1,
wherein the non-covalent bond is a hydrogen bond,
or wherein the non-covalent bond is formed by Van der Waals forces,
or wherein the non-covalent bond is formed by ionic interactions,
or wherein the non-covalent bond is formed by pi-pi interaction.

3. A branched copolymer according to claim 1,
wherein at least one of (a)-(c) comprises a moiety that is capable to act as a hydrogen-bond donor,
and wherein at least one one of (a)-(c) comprises a moiety that is capable to act as a hydrogen-bond acceptor.

4. A branched copolymer according to claim 1,
wherein the polymer comprises an acid residue, preferably a carboxylic acid residue, and an ether residue, preferably an alkylene oxide residue.

5. A branched copolymer according to claim 4,
wherein the two chains comprise at least two ethyleneically monounsaturated monomers,
wherein one of the ethyleneically monounsaturated monomers is (meth)acrylic acid or a (meth)acrylic acid derivative,
wherein one of the ethyleneically monounsaturated monomers is a poly(ethyleneglycol) (meth)acrylate or a poly(ethyleneglycol) derivative,
and wherein the molar ratio of acid to ethyleneoxide units is between 5:1 and 1:5.

6. A branched copolymer according to claim 5, wherein the molar ratio of acid to ethyleneoxide units is between 0.66:1 and 1:1.5.

7. A branched copolymer according to claim 5 or 6,
wherein the molecular weight of the poly(ethyleneglycol) (meth)acrylate or the poly(ethyleneglycol) derivative is between 500 and 10,000 Daltons.

8. A method of preparing a branched amphiphilic copolymer according to any one of the preceding claims by an addition polymerisation process,
preferably a free-radical polymerisation process,
which comprises forming an admixture of
(a) at least one ethyleneically monounsaturated monomer;
(b) from 1 to 25 mole% (based on the number of moles of monofunctional monomer(s)) of at least one ethyleneically polyunsaturated monomer;
(c) a chain transfer agent; and
(d) an initiator, optionally but preferably a free-radical initiator;
and reacting said mixture to form a branched copolymer.

9. An oil/water emulsion comprising a polymer according to any of claims 1 to 7 at the oil-water interface.

10. An emulsion according to claim 9, wherein the dispersed phase is aggregated.

11. An emulsion according to claim 9 or 10, wherein an active ingredient is incorporated in the dispersed phase.

12. A method of preparing an emulsion according to any of claims 9 to 11, comprising a step wherein an aqueous solution of a polymer according to any of claims 1 to 7 is mixed with a hydrophobic liquid at conditions where the moiety of at least one of the monounsaturated monomer(s) and polyunsaturated monomer(s) and chain transfer agent does not form a non-covalent bond with any of the monounsaturated monomer(s) and polyunsaturated monomer(s) and chain transfer agent.

13. A method of preparing an emulsion according to any of claims 9 to 11, comprising a step wherein an aqueous solution of a polymer according to any of claims 4 to 7 is mixed with a hydrophobic liquid at a pH above the pKa of the acid residue of the polymer.

14. A method according to claim 13,
followed by a step wherein the pH of the aqueous solution is decreased to a value below the pKa of the acid residue of polymer.

15. Use of a branched copolymer according to any of claims 1 to 7 as emulsifier.
